# EUROPÄISCHE PATENTSCHRIFT

(11) **EP 2 964 469 B1**
(45) Veröffentlichungstag und Bekanntmachung des Hinweises auf die Patenterteilung: **20.09.2017**
(21) Anmeldenummer: 14705517.2
(22) Anmeldetag: 19.02.2014
(51) Int. Cl.: B42D 15/00

(54) **DOKUMENT MIT EINEM BUCHARTIGEN AUFBAU**
DOCUMENT HAVING A BOOKLIKE STRUCTURE
DOCUMENT AYANT UNE STRUCTURE DE TYPE LIVRE

(30) Priorität: 04.03.2013 DE 102013203669
(43) Veröffentlichungstag der Anmeldung: 13.01.2016
(73) Patentinhaber: Bundesdruckerei GmbH, 10969 Berlin (DE)
(72) Erfinder: WOLF, Andreas, 07743 Jena (DE); GUTMANN, Roland, 14612 Falkensee (DE)
(74) Vertreter: Richardt Patentanwälte PartG mbB
(86) Internationale Anmeldenummer: PCT/EP2014/053265
(87) Internationale Veröffentlichungsnummer: WO 2014/135372

(56) Entgegenhaltungen:
- EP-A1- 2 511 104
- GB-A- 2 172 850
- US-A1- 2011 180 608

## Beschreibung

Die Erfindung betrifft ein buchartig aufgebautes Dokument und ein Verfahren zu dessen Verifizierung sowie zur Authentifizierung einer Person als Inhaber des Dokuments.

Aus der Druckschrift DE 10 2010 002 464 A1 ist ein Dokument mit einem Buchdeckel bekannt. Dieses Dokument lässt einen buchartigen Aufbau erkennen, der weitgehend dem der konventionellen papierbasierten Reisepässe entspricht. Darüber hinaus umfasst das offenbarte Dokument eine besondere Personalisierungsseite mit einer maschinenlesbareren Zone (MRZ). Bei der Kontrolle beispielsweise durch eine Behörde wird die maschinenlesbarere Zone ausgelesen, um eine Verifizierung des Dokuments zu ermöglichen.

Um das Abfertigen von Reisenden beispielsweise in einem Flughafen zu vereinfachen, aber auch zu beschleunigen, werden zunehmend automatische biometriegestützte Grenzkontrollsysteme installiert. Erforderlich für die Benutzung dieser automatischen Grenzkontrollsysteme ist ein elektronischer Reisepass, der mit einem integrierten elektronischen Schaltkreis, insbesondere einem RFID-Chip ausgestattet ist. Hierdurch können insbesondere die Lastspitzen bei der Einreise abgefangen werden. Dabei legt der Reisende seinen elektronischen Reisepass mit der Personalisierungsseite auf ein Lesegerät. Das Lesegerät liest dann eine maschinenlesbare Zone aus, die den Zugriff auf weitere in dem Dokument gespeicherte Daten ermöglicht.

US 2011/180608 A1 offenbart ein Dokument nach dem Oberbegriff des Anspruchs 1.

Damit stellt sich die Aufgabe, ein verbessertes Dokument zu schaffen, das die Durchführung einer Verifizierung oder Echtheitsprüfung und die automatisierte Authentifizierung einer Person als dessen Inhaber erleichtert und beschleunigt.

Diese Aufgabe wird unter unterschiedlichen Aspekten mit den Merkmalen der unabhängigen Ansprüche gelöst. Darauf aufbauende Ausgestaltungen und Weiterbildungen sind in den jeweils abhängigen Patentansprüchen angegeben. Dementsprechend als grundlegende Lösung bereitgestellt wird ein Dokument in buchartigem Aufbau mit einem vorderen und einem hinteren Einband, einer Personalisierungsseite und mit einem integrierten elektronischen Schaltkreis zur Speicherung von Daten. Dabei umfasst der Schaltkreis eine Funkschnittstelle zum Auslesen der Daten. Die Personalisierungsseite ist mit einer ersten optisch lesbaren Zone mit Informationen versehen. Weiterhin ist in dem Dokument eine zweite optisch lesbare Zone vorgesehen, in der die Informationen der ersten optisch lesbaren Zone enthalten sind. Der vordere und/oder hintere Einband des Dokuments weist ein Fenster auf, durch das die zweite optisch lesbare Zone in geschlossenem Zustand des Dokuments optisch erfassbar ist.

Unter "Personalisierungsseite" wird hier eine Seite des Dokuments verstanden, die zur Personalisierung vorgesehen oder bereits personalisiert ist. Beispielsweise beinhaltet die Personalisierungsseite eine oder mehrere Kunststoffschichten zur Laserpersonalisierung. Alternativ oder zusätzlich können Personalisierungsdaten einbelichtet oder eingedruckt werden. Die Personalisierungsseite kann textuelle Angaben zu dem Inhaber des Dokuments aufweisen sowie eine erste optisch lesbare Zone, die insbesondere als maschinenlesbare Zeile, insbesondere als eine von der internationalen Luftfahrtbehörde (ICAO) spezifizierte Machine Readable Zone (MRZ) ausgebildet ist. Des Weiteren kann die Personalisierungsseite ein Passfoto des Inhabers tragen, welches aufgedruckt, einbelichtet, eingeklebt oder mittels Laserpersonalisierung in die Personalisierungsseite eingebracht sein kann.

Unter einem "Blatt" wird im Folgenden ein Bogen des Dokuments verstanden, der zwischen den Buchdeckeln angeordnet ist und eine vordere und eine rückwärtige Seite umfasst. Ein Blatt kann aus Papier und/oder aus Kunststoff bestehen. Insbesondere kann dieses Blatt eine Personalisierungsseite ausbilden, auf die eine Kunststoffschicht laminiert ist, so wie das beispielsweise beim elektronischen Reisepass der Bundesrepublik Deutschland der Fall ist.

Durch das Anbringen einer zweiten optisch lesbaren Zone, die zumindest die Informationen der ersten optisch lesbaren Zone enthält, und die durch ein Fenster auf dem vorderen und/oder hinteren Einband mittels eines Lesegerätes optisch erfassbar ist, ist es möglich, die Informationen der ersten optisch lesbaren Zone zu erhalten, wenn das Dokument von einem Reisenden ungeöffnet oder nicht korrekt positioniert auf den Scanner des Lesegerätes gelegt wird. Somit kann auch bei geschlossenem Pass in einer Grenzkontrollanlage das elektronische Auslesen des Passes erfolgen.

In einer eigenständigen Ausgestaltung des Dokuments ist die zweite optisch lesbare Zone in einer ersten Alternative auf der Personalisierungsseite angelegt und insbesondere ein Teil oder Bereich in der ersten optisch lesbaren Zone. In einer zweiten Alternative ist die zweite optisch lesbare Zone auf einem der Innenblätter angelegt. Dabei kann insbesondere die optisch lesbare Zone auf einer Seite eines Innenblatt angelegt sein, die einem Einband oder der Personalisierungsseite gegenüber liegt.

In einer weiteren eigenständigen Ausgestaltung des Dokuments setzt die Freigabe des Auslesens der Daten das vorherige Auslesen der Informationen aus der ersten optisch lesbaren Zone voraus.

In einer weiteren eigenständigen Ausgestaltung des Dokuments kann vorgesehen sein, dass die zweite optisch lesbare Zone auf der der Personalisierungsseite gegenüber liegenden Seite angeordnet ist. Hierdurch wird auch bei einem falschen Auflegen des Passes durch einen Reisenden auf das Lesegerät eine Erfassung ermöglicht. Erfindungsgemäß ist das Fenster nur für Licht im nahen IR-Bereich durchlässig, Durch diese besondere Wahl kann die Fälschungssicherheit erhöht werden. Es müsste einem Fälscher in diesem Fall bekannt sein, dass mit einem Lesegerät, das beispielsweise nur im sichtbaren Bereich arbeitet, die in der zweiten optisch lesbaren Zone enthaltenen Informationen nicht ausgelesen werden können.

In einer weiteren eigenständigen Ausgestaltung des Dokuments besteht das Fenster aus einem geeigneten Kunststoff. Die spektrale Durchlässigkeit des Kunststoffs kann so gewählt werden, dass dessen unter Normalbeleuchtung wahrnehmbare Farbe sich nicht von der in den angrenzenden Bereichen des Einbands unterscheidet, im Bereich der Wellenlänge der zur Erfassung eingesetzten Beleuchtung jedoch eine gute Durchlässigkeit vorhanden ist.

In einer weiteren eigenständigen Ausgestaltung des Dokuments handelt es sich bei dem integrierten elektronischen Schaltkreis um einen RFID-Chip und/oder um einen NFC-Chip. RFID-Systeme oder NFC-Systeme können über eine Funkverbindung kontaktlos ausgelesen werden, sodass die in einem RFID-Chip gespeicherten Daten über Funkwellen einfach verfügbar gemacht werden können. Bei niedrigen Frequenzen geschieht dies induktiv über ein Nahfeld, bei höheren Frequenzen über ein elektromagnetisches Fernfeld.

In einer weiteren eigenständigen Ausgestaltung des Dokuments kann der integrierte elektronische Schaltkreis zur Ausführung eines kryptographischen Protokolls ausgebildet sein. Das erfolgreiche Ausführen dieses kryptographischen Protokolls mit Hilfe der aus einer optisch lesbaren Zone erfassten Informationen kann in einer davon abhängigen Ausgestaltung eine Voraussetzung für das Auslesen der Daten aus dem integrierten elektronischen Schaltkreis bilden. Erfindungsgemäß ist auch das Kunststofffenster nur im nahen IR-Bereich durchlässig.

In einer weiteren eigenständigen Ausgestaltung des Dokuments ist die zweite optisch lesbare Zone als Barcode, als 2D-Barcode, als High Capacity Color Barcode, als Maxi-Code, als QR-Code oder als Datamax-Code ausgebildet. Dies hat gegenüber bekannten, sogenannten "Machine Readable Zone" (MRZ), die auch als ICAO-Zeile bezeichnet wird, den Vorteil, dass in derart gestalteten optisch lesbaren Zonen mehr Informationen untergebracht werden können als dies in einer typischen MRZ der Fall ist. Hierdurch besteht die Möglichkeit, die Informationen sowohl redundant abzuspeichern als auch zusätzliche Informationen, wie beispielsweise biometrische Merkmale, die durch eine Merkmalsextraktion gewonnen wurden, in der zweiten optisch lesbaren Zone abzuspeichern.

In einer weiteren eigenständigen Ausgestaltung des Dokuments kann vorgesehen sein, dass durch die korrekte Erfassung der zweiten optisch lesbaren Zone durch das Lesegerät ein kryptografisches Protokoll durchgeführt werden kann. Beispielsweise kann die zweite optisch lesbare Zone einen kryptografischen Schlüssel für die Durchführung des kryptografischen Protokolls beinhalten oder es kann aus der zweiten optisch lesbaren Zone ein solcher kryptografischer Schlüssel durch das Lesegerät ableitbar sein. In einer davon abhängigen Ausgestaltung kann vorgesehen sein, dass die in der zweiten optisch lesbaren Zone enthaltenen Informationen signiert sind, um die Fälschungssicherheit der zweiten optisch lesbaren Zone zu erhöhen.

In einer weiteren eigenständigen Ausgestaltung des Dokuments kann der integrierte elektronische Schaltkreis zur Ausführung eines kryptografischen Protokolls ausgebildet sein. Nur bei erfolgreicher Ausführung des kryptografischen Protokolls mithilfe der ausgelesenen Informationen aus der ersten oder der zweiten optisch lesbaren Zone können die Daten aus dem integrierten elektronischen Schaltkreis ausgelesen werden. Somit kann überprüft werden, ob überhaupt eine Berechtigung zum Auslesen der Daten aus dem integrierten elektronischen Schaltkreis besteht. Falls es sich um nachträglich aufgebrachte optisch lesbare Zonen auf dem Dokument handelt, die jedoch von einem Unbefugten aufgebracht worden sind, so wird ein Auslesen der Daten verhindert.

In einer weiteren eigenständigen Ausgestaltung kann es sich bei dem buchartig aufgebauten Dokument um ein Passbuch handeln, insbesondere um einen elektronischen Reisepass, der für automatisierte Kontrollen einsetzbar ist. Es können aber auch andere buchartig aufgebaute Dokumente wie Personalausweise, Visa, Führerscheine, Fahrzeugscheine, Fahrzeugbriefe, Firmenausweise und dergleichen davon umfasst sein. Nicht beansprucht wird ein Verfahren zur Verifizierung eines Dokuments und zur Authentifizierung einer Person als Inhaber des Dokuments, das alternative Verfahrensteile vorsieht, die in Abhängigkeit von der Positionierung des Dokuments gegenüber einem Lesegerät ausgewählt und durchgeführt werden.

Das Verfahren prüft zunächst ob das Dokument zum Lesegerät eine Lage einnimmt, in der die erste optisch lesbare Zone durch das Lesegerät erfassbar ist oder nicht. Das ist insbesondere gegeben, wenn das Dokument mit der Personalisierungsseite auf das Lesegerät aufgelegt ist. In diesem Fall sieht das Verfahren einen Abschnitt zur optischen Erfassung der ersten optisch lesbaren Zone für das Auslesen der Information vor. Danach folgt ein Abschnitt zum Senden der gelesenen oder einer daraus abgeleiteten Information aus der ersten optisch lesbaren Zone über eine Funkschnittstelle an den integrierten elektronischen Schaltkreis. In einem nächsten Abschnitt wird ein erstes kryptographisches Protokoll mit Hilfe der optisch ausgelesenen oder daraus abgeleiteten Informationen aus der ersten optisch lesbaren Zone ausgeführt, um das Dokument zu verifizieren und auf die in dem integrierten elektronischen Schaltkreis gespeicherten Daten Zugriff zu erhalten. In einem weiteren Abschnitt wird ein Bild der Person mittels einer Kamera aufgenommen, das in einem nachfolgenden Abschnitt mit den ausgelesenen Daten verglichen und auf eine ausreichende Übereinstimmung hin überprüft wird. Schließlich erfolgt die Authentifizierung der Person als Inhaber des Dokuments anhand der erfolgreichen Überprüfung;

Falls hingegen das Dokument zum Lesegerät eine Lage einnimmt, in der nur die zweite optisch lesbare Zone durch das Lesegerät erfassbar ist, insbesondere falls das Dokuments mit der der Personalisierungsseite gegenüberliegenden Seite oder mit dem vorderen oder hinteren Einband auf das Lesegerät aufgelegt ist, sieht das Verfahren einen Abschnitt zur optischen Erfassung der zweiten optisch lesbaren Zone vor. Ein weiterer Abschnitt umfasst das Durchführen eines zweiten kryptographischen Protokolls mit Hilfe der optisch ausgelesenen oder daraus abgeleiteten Informationen aus der zweiten optisch lesbaren Zone zur Prüfung einer Signatur der Informationen, um die in der zweiten optisch lesbaren Zone beinhalteten biometrischen Merkmale zu verifizieren. Wiederum ein weiterer Abschnitt betrifft die Aufnahme eines Bildes der Person mittels einer Kamera. In einem weiteren Abschnitt erfolgt die Überprüfung des aufgenommenen Bildes mit den ausgelesenen biometrischen Merkmalen. Ein weiterer Abschnitt ist vorgesehen zur Authentifizierung der Person als Inhaber des Dokuments anhand der Überprüfung.

Falls in einer Ausgestaltung des Dokuments die zweite optisch lesbare Zone Informationen über biometrische Merkmale enthält, die nicht in der ersten optisch lesbaren Zone nicht gespeichert sind, ist es möglich, das vorangehend dargestellte Verfahren zur Verifizierung des Dokuments und zur Authentifizierung des Inhabers des Dokuments zu modifizieren. Wenn die biometrischen Merkmale ausreichend sind für eine Verifizierung und Authentifizierung des Dokuments, kann auf das Auslesen der Daten aus dem integrierten elektronischen Schaltkreis verzichtet werden. Hierdurch ist eine Beschleunigung des Verfahrensablaufs möglich, da durch den Verzicht auf das Auslesen der Daten aus dem elektronischen Schaltkreis eine schnellere Verifizierung des Dokuments möglich ist. Da gerade bei automatisierten Grenzkontrollanlagen, bei denen beispielsweise das EasyPass-Verfahren zur Anwendung kommt, zu Spitzenzeiten große Personengruppen von Reisenden abgefertigt werden müssen, stellt dies einen zusätzlichen Vorteil dar.

In einer eigenständigen Ausgestaltung des Verfahrens ist es möglich, dass nicht nur die Merkmale einer Gesichtsbildbiometrie gespeichert werden und in dem System mittels einer Kamera abgeglichen werden, sondern dass auch beispielsweise eine Iris- und/oder Fingerabdruckbiometrie durchgeführt wird.

In einer eigenständigen Ausgestaltung des Verfahrens kann vorgesehen sein, dass die in der zweiten optisch lesbaren Zone im Vergleich zur ersten optisch lesbaren Zone zusätzlich enthaltenen Informationen mit einer Datenbank in einem Computersystem verglichen werden. Bei diesen Informationen kann es sich beispielsweise um Angaben in einer Suchliste handeln, die vorab festlegen, ob das Auslesen der biometrischen Merkmale aus der zweiten optisch lesbaren Zone ausreichend ist für eine Verifizierung und Authentifizierung des Dokuments.

In einer eigenständigen Ausgestaltung des Verfahrens kann vorgesehen sein, bei einer erfolgreichen Verifizierung und/oder Authentifizierung die Türen einer Schleusenvorrichtung zur Öffnung anzusteuern, damit eine Person nach erfolgreicher Authentifizierung den Kontrollbereich verlassen kann.

In einer eigenständigen Ausgestaltung des Verfahrens kann in der zweiten Alternative der Erfassung die zweite optisch lesbare Zone selektiv mit Licht im nahen IR-Bereich, im sichtbaren Bereich und/oder UV-Bereich ausgelesen werden. Die dabei erfassten Unterschiede in den ausgelesenen Informationen bei unterschiedlichen Wellenlängen können zweckmäßig eine weitere Voraussetzung für eine erfolgreiche Verifizierung des Dokuments sein. Die zweite optisch lesbare Zone kann im Vergleich zur ersten optisch lesbaren Zone mit weiteren Sicherheitsmerkmalen versehen werden, da insbesondere bei einer Ausbildung der zweiten optisch lesbaren Zone als 2D-Barcode dort mehr Informationen untergebracht werden können als in der als maschinenlesbare Zone (MRZ).

Somit kann das Problem gelöst werden, dass von einem Teil der Reisenden die Reisepässe nicht geöffnet werden, sondern stattdessen geschlossen mit dem oberen oder unteren Einband des Reisepasses auf das Lesegerät gelegt werden, wie die Reisenden dies bisher auch gegenüber einem Grenzbeamten gehandhabt haben. Aber auch wenn die Reisepässe von den Reisenden geöffnet werden, so passiert es immer wieder, dass sie die Personalisierungsseite nicht adäquat auf den Scanner des Lesegerätes legen, sondern beispielsweise quer oder mit der der Personalisierungsseite gegenüberliegenden Seite. Diese Fehlbedienungen führen zu Fehlern im Verfahrensablauf einer automatisierten biometrischen Grenzkontrolle (Easy Pass), sodass die gewünschte Anzahl der abzufertigenden Reisenden nicht erreicht werden kann. Es hat sich auch gezeigt, dass entsprechende Hinweisschilder von den Reisenden nicht ausreichend beachtet werden, sodass hierdurch keine Abhilfe für dieses Problem geschaffen werden kann.

Mit den vorangehend dargestellten grundlegenden Maßnahmen und Vorkehrungen kann in jedem Fall, unabhängig davon, ob der Reisende seinen Reisepass öffnet oder geschlossen auf das Lesegerät legt, eine automatisierte Kontrolle des Reisenden durchgeführt werden. Dabei kann ein "falsches" Auflegen sogar zu einer Beschleunigung der Kontrolle führen, nämlich dann, wenn in der zweiten optisch lesbaren Zone, die auf der der Personalisierungsseite gegenüberliegenden Seite, auf der sonst nicht personalisierten Rückseite der Personalisierungsseite und/oder auf ein oder mehreren weiteren Blättern des Dokuments aufgebracht ist, eine Signatur der Information vorhanden ist. Durch Verifikation dieser Signatur kann dann auf einen Zugriff auf den Chip des Dokuments verzichtet werden, so dass die sonst im Allgemeinen erforderliche und relativ zeitaufwändige Chip Authentication und Terminal Authentication entfallen kann.

In einer Ausgestaltung ist die zweite optisch lesbare Zone als Barcode, als 2D-Barcode, als high capacity color Barcode, als MaxiCode, als QR-Code oder als DataMatrix-Code ausgebildet.

Im Folgenden werden bevorzugte Ausführungsformen mit Bezugnahme auf die Zeichnungen näher erläutert. Darin zeigen:
- Fig. 1: eine perspektivische, schematische Darstellung einer bevorzugten Ausführungsform eines buchartig aufgebauten Dokuments;
- Fig. 2: eine schematische Darstellung einer Ausführungsform einer Personalisierungsseite in einem buchartig aufgebauten Dokument;
- Fig. 3: eine schematische Darstellung einer Ausführungsform einer der Personalisierungsseite gegenüberliegenden Seite eines buchartig aufgebauten Dokuments;
- Fig. 4: eine Draufsicht auf einen vorderen Einband eines buchartig aufgebauten Dokuments mit einem Fenster und einem 2D-Barcode;
- Fig. 5: eine Draufsicht auf einen hinteren Einband eines buchartig aufgebauten Dokuments mit einem Fenster und einem 2D-Barcode;
- Fig. 6: eine Darstellung eines 2D-Barcodes innerhalb einer figürlichen Darstellung;
- Fig. 7: eine weitere Darstellung eines grafisch gestalteten 2D-Barcodes; und
- Fig. 8: ein Flussdiagramm einer Ausführungsform eines Verfahrens zur Verifizierung eines Dokuments und zur Authentifizierung einer Person als dessen Inhaber.

Elemente der nachfolgenden Figuren, die einander entsprechen, werden mit denselben Bezugszeichen gekennzeichnet.

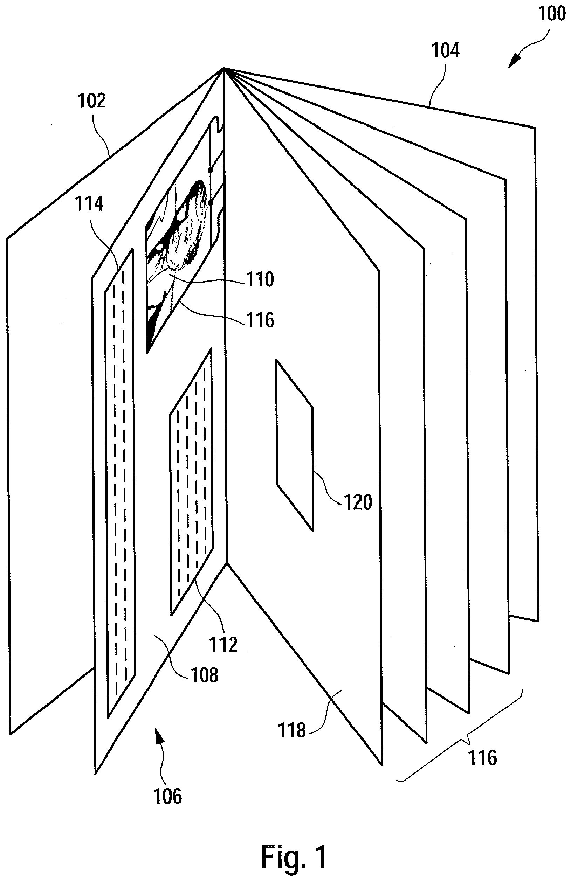

Die Figur 1 zeigt ein exemplarisches Dokument 100 in einem buchartigen Aufbau. Das Dokument 100 hat dementsprechend einen vorderen Einband 102 und einen hinteren Einband 104, deren Innenseiten in geschlossenem Zustand des Dokuments 100 zueinander weisen.

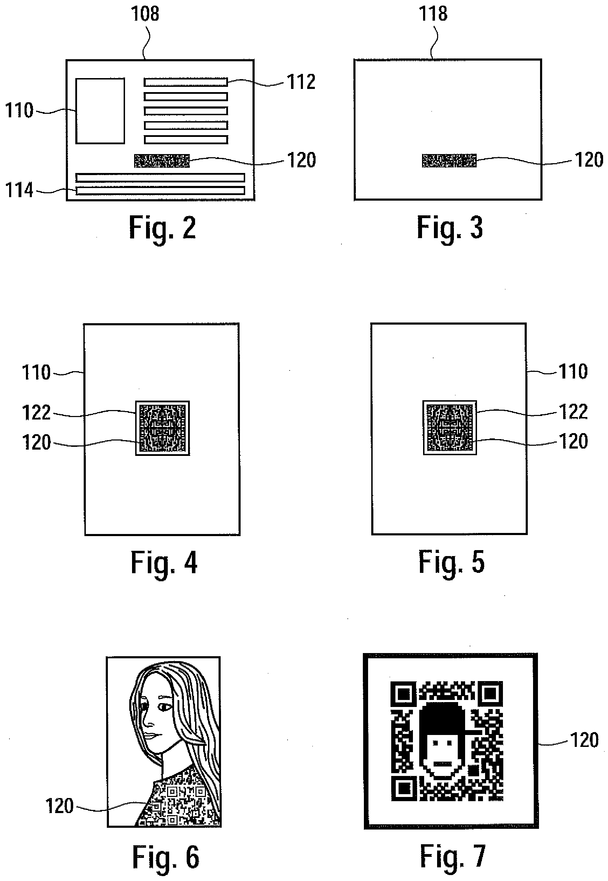

Zwischen den beiden Einbänden 102, 104 kann sich ein Blatt 106 mit einer Personalisierungsseite 108 befinden, das als Personalisierungsblatt bezeichnet und nochmals in Fig. 2 dargestellt ist. Dieses Personalisierungsblatt 106 hat üblicherweise einen schichtförmigen Aufbau, wobei die Personalisierungsseite 108 typisch einseitig ausbildet ist. Bei den Schichten, aus denen das Personalisierungsblatt 106 aufgebaut ist, kann es sich um Kunststoffschichten handeln, insbesondere um Polycarbonatschichten.

Der Schichtaufbau des Personalisierungsblattes 106 kann insbesondere für eine Laserpersonalisierung oder zur Durchführung anderer Personalisierverfahren ausgebildet sein. Durch die Personalisierung wird zum Beispiel auf die Personalisierungsseite 108 ein Passfoto 110 mit einem Bild des Inhabers des Passes sowie ein Textfeld 112 eingebracht, welches persönliche Angaben zu dem Inhaber des Dokuments 100 beinhaltet, wie zum Beispiel dessen Namen, Geburtsdatum und Anschrift. Ein weiteres Textfeld 114 auf der Personalisierungsseite 108 bildet eine erste optisch lesbare Zone, die maschinenlesbar ausgebildet ist, insbesondere als sogenannte "Machine Readable Zone" (MRZ), wie von der internationalen Luftfahrtbehörde (ICAO) spezifiziert.

Das Dokument kann neben dem Personalisierungsblatt 106 wie in der Zeichnung angedeutet weitere Innenblätter 116 umfassen, die insbesondere aus Papier oder einem papierähnlichen Material bestehen können.

Wie in Fig. 3 dargestellt, kann auf der der Personalisierungsseite 108 gegenüberliegenden Seite 118 eine zweite optisch lesbare Zone 120 aufgebracht sein. Die zweite optisch lesbare Zone 120 kann als Barcode, als 2D-Barcode, als "High Capacity Color Barcode", als Maxicode, als QR-Code oder als Datamatrix Code ausgebildet sein.

Wie in Figur 2 dargestellt, kann in einer Ausgestaltung des Dokuments 100 auch vorgesehen sein, die Personalisierungsseite 108 ebenfalls mit einer zweiten optisch lesbaren Zone 120 zu versehen.

Wie aus den Figuren 4 und 5 hervorgeht, kann in dem vorderen Einband 102 und/oder in dem hinteren Einband 104 jeweils ein Fenster 122 vorgesehen sein. Das Fenster 122 kann jeweils als Durchbruch oder Aussparung angelegt sein oder als transparenter Abschnitt des Einbands. Ein transparenter Abschnitt kann aus einem speziellen Kunststoff bestehen, der erfindungsgemäß nur für IR-Licht durchlässig ist. Durch das Fenster 122 hindurch kann in geschlossenem Zustand des Dokuments ein zweidimensionaler Barcode 120 sichtbar und erfassbar sein. Dieser Barcode ist dadurch ohne Aufklappen oder Aufschlagen des Dokuments 100 durch das Fenster 122 auslesbar. Das Fenster 122 ist nur für Licht im nahen IR-Bereich durchlässig. Insbesondere kann vorgesehen sein, dass der Aufdruck der zweiten optisch lesbaren Zone 120, die insbesondere als 2D-Barcode ausgebildet sein kann, aus einer nur im IR-Licht sichtbaren Tinte oder Farbe besteht. Damit kann die zweite optisch lesbare Zone 120 unsichtbar gemacht werden. Sie ist unter Beleuchtung mit Licht im IR-Bereich erfassbar.

Durch das Fenster 122 kann die zweite optisch lesbare Zone 120 gut ausgelesen werden. Zudem ist sie vor Abnutzung geschützt. Bei einem alternativen Aufdruck auf einer Außenseite eines Einbands bestünde die Gefahr, dass Reisende die optisch lesbare Zone manuell entfernen oder versehentlich beschädigen. Durch die Anbringung auf den innenliegenden Seiten des Dokuments 100 wird dieser Gefahr vorgebeugt und gleichwohl ist durch das Fenster 122 ein Auslesen problemlos möglich.

Des Weiteren ist es möglich, wie in den Figuren 6 und 7 dargestellt, gestalterische Ausprägungen zuzulassen. So können insbesondere Barcodes 120 beispielsweise in einem Bild, Symbol oder Wappen integriert sein, so dass hier eine Vielzahl von gestalterischen Möglichkeiten gegeben ist. Des Weiteren kann ein Barcode bei einer Beleuchtung im sichtbaren Licht nicht sichtbar sein, während er im IR-Bereich auslesbar ist.

Das buchartig aufgebaute Dokument 100, insbesondere ein in dieser Art realisierter elektronischer Pass, kann somit in geschlossenem Zustand und damit ohne ihn zu öffnen, d.h. aufzuklappen oder aufzublättern, problemlos ausgelesen werden. Insbesondere ist das sorgfältige Auflegen des Dokuments 100 mit der der Personalisierungsseite auf dem Lesegerät 130 nicht erforderlich. Datenschutzaspekten wird dadurch Rechnung getragen, dass das Auslesen des Barcodes 120 aus einer größeren Entfernung nicht möglich ist. Insbesondere erschwert ein Fenster 122, das nur im IR-Bereich durchlässig ist, das Auslesen aus der Entfernung zusätzlich. Ferner kann vorgesehen sein, dass weitere Daten, wie beispielsweise die Nationalität des Inhabers des Dokuments oder Angaben für einen Abgleich mit Negativ-Datenbanken, sogenannten Suchlisten, in dem Barcode 120 gespeichert sind. Insbesondere kann vorgesehen sein, dass biometrische Merkmale nach einer Merkmalsextraktion gespeichert sind, wodurch das Verfahren der Verifizierung und Authentifizierung beschleunigt und abgekürzt werden kann.

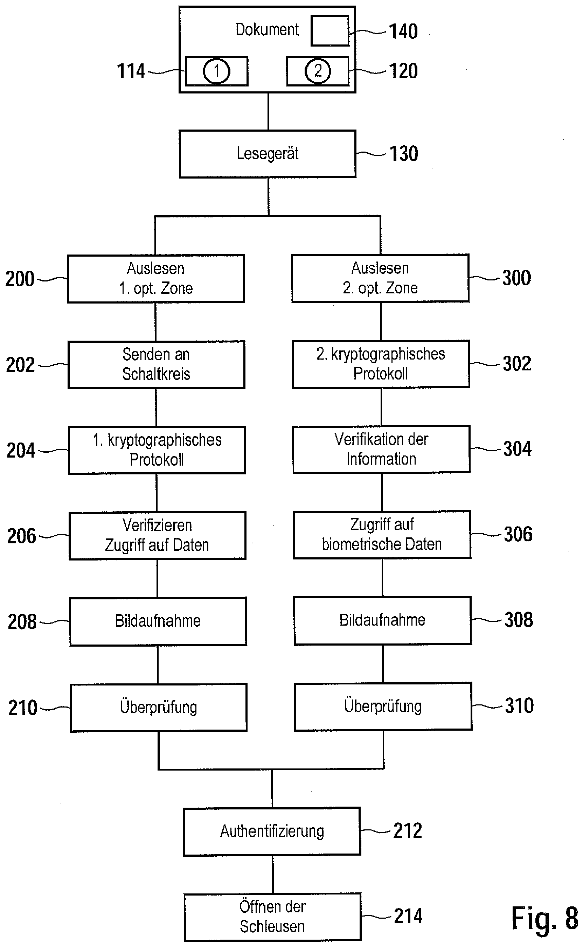

Die Figur 8 zeigt ein Flussdiagramm zum Ablauf eines exemplarischen nicht beanspruchten Verfahrens zur Verifizierung insbesondere eines vorangehend dargestellten Dokuments 100. Das Dokument 100 wird dazu zunächst auf ein Lesegerät 130 gelegt oder in anderer Weise in dessen Erfassungsbereich positioniert. Das Lesegerät 130 liest in Abhängigkeit von der Positionierung des Dokuments die erste optisch lesbare Zone 114 oder die zweite optisch lesbare Zone 120 aus.

Wird in dem Abschnitt 200 die erste optisch lesbare Zone 114 ausgelesen, so werden die gelesenen oder einer daraus abgeleiteten Information aus der ersten optisch lesbaren Zone 114 über eine Funkschnittstelle an einen integrierten elektronischen Schaltkreis 140 des Dokuments 100 in dem Abschnitt 202 gesendet. In dem Abschnitt 204 erfolgt die Durchführung eines ersten kryptographischen Protokolls mit Hilfe der optisch ausgelesenen oder daraus abgeleiteten Informationen aus der ersten optisch lesbaren Zone 114. Dieses kryptografische Protokoll kann die gegenseitige Authentifizierung des integrierten elektronischen Schaltkreis 140 und des Lesegeräts 130 beinhalten, d.h. die sog. Chip Authentication (CA) und die Terminal Authentication (TA).

Dann wird in einem Abschnitt 206 das Dokument verifiziert und bei erfolgreicher Verifizierung auf die in dem integrierten elektronischen Schaltkreis 140 gespeicherten Daten zugegriffen.

Weiterhin kann das Verfahren zur Authentifizierung der Person als Inhaber des Dokuments 100 ausgestaltet sein. Dazu wird in einem weiteren Abschnitt 208 ein Bild von der Person mittels einer Kamera aufgenommen. In dem Abschnitt 210 wird das aufgenommene Bild der Person mit den ausgelesenen Daten des Inhabers des Dokuments 100 verglichen und überprüft. Danach folgt die Authentifizierung 212 der Person als Inhaber des Dokuments anhand der Überprüfung. Bei einer erfolgreichen Authentifizierung öffnen sich anschließend beispielsweise in einem typischen Anwendungsfall die Schleusen oder Türen einer Kontrollanlage.

Wird in dem Abschnitt 300 die zweite optisch lesbare Zone 120 ausgelesen, so wird in einem anschließenden Abschnitt 302 ein zweites kryptographisches Protokoll, nämlich eine Signaturprüfung der aus der zweiten optisch lesbaren Zone 120 ausgelesenen Information gestartet. In dem anschließenden Abschnitt 304 erfolgt die Verifizierung der Signatur der Informationen aus der zweiten optisch lesbaren Zone 120. Dann wird in einem weiteren Abschnitt 306 das Dokument 100 verifiziert und bei erfolgreicher Verifizierung auf die in der zweiten optisch lesbaren Zone 120 gespeicherten biometrischen Daten zugegriffen.

In einem nächsten Abschnitt 308 wird ein Bild der Person mittels einer Kamera aufgenommen. In dem Abschnitt 310 wird das aufgenommene Bild mit den ausgelesenen biometrischen Daten verglichen und überprüft. Dann findet im Abschnitt 212 eine Authentifizierung der Person als Inhaber des Dokuments 100 anhand der Überprüfung statt und bei einer erfolgreichen Authentifizierung öffnen sich die Schleusen oder Türen einer Kontrollanlage.

Mit den vorangehend dargestellten Maßnahmen kann das Problem gelöst werden, dass von einem Teil der Reisenden die Reisepässe nicht geöffnet, d.h. aufgeschlagen oder aufgeblättert, werden, sondern stattdessen geschlossen mit dem oberen oder unteren Einband des Reisepasses auf das Lesegerät gelegt werden, wie die Reisenden dies bisher auch gegenüber einem Grenzbeamten gehandhabt haben. Aber auch wenn die Reisepässe von den Reisenden geöffnet werden, so passiert es immer wieder, dass sie die Personalisierungsseite nicht adäquat auf den Scanner des Lesegerätes legen, sondern beispielsweise quer oder mit der der Personalisierungsseite gegenüberliegenden Seite. Diese Fehlbedienungen führen zu Fehlern im Verfahrensablauf einer automatisierten biometrischen Grenzkontrolle.

Im Ergebnis kann eine Beschleunigung des Kontrollablaufs erreicht werden, da auf die Daten in dem elektronischen Schaltkreis nicht mehr in jedem Fall zugegriffen werden muss und auch bei nicht korrektem Auflegen auf das Lesegerät eine Kontrolle möglich ist.

### Bezugszeichen liste

- 100: Dokument
- 102: vorderer Einband
- 104: hinterer Einband
- 106: Personalisierungsblatt
- 108: Personalisierungsseite
- 110: Passfoto
- 112: Textfeld
- 114: erste optisch lesbare Zone
- 116: Innenblatt
- 118: zweite Seite
- 120: zweite optisch lesbare Zone
- 122: Fenster
- 130: Lesegerät
- 140: elektronischer Schaltkreis

## Patentansprüche

1. Dokument (100) in buchartigem Aufbau mit einem vorderen und einem hinteren Einband (102, 104), einer Personalisierungsseite (108) und mit einem integrierten elektronischen Schaltkreis (140) zur Speicherung von Daten, wobei der Schaltkreis (140) eine Funkschnittstelle zum Auslesen der Daten umfasst, und wobei die Personalisierungsseite (108) mit einer ersten optisch lesbaren Zone (114) mit Informationen versehen ist, wobei eine zweite optisch lesbare Zone (120) vorgesehen ist, in der die Informationen der ersten optisch lesbaren Zone (114) enthalten sind, und der vordere und/oder hintere Einband (102, 104) ein Fenster (122) aufweist, durch das die zweite optisch lesbare Zone (120) in geschlossenem Zustand des Dokuments (100) optisch erfassbar ist, **dadurch gekennzeichnet, dass** das Fenster (122) nur für Licht im nahen IR-Bereich durchlässig ist und insbesondere aus einem Kunststoff besteht.

2. Dokument (100) nach Anspruch 1, wobei die zweite optisch lesbare Zone (120) auf der Personalisierungsseite (108) angelegt ist und insbesondere ein Teil oder Bereich in der ersten optisch lesbaren Zone (114) ist.

3. Dokument nach Anspruch 1 wobei die zweite optisch lesbare Zone (120) auf einer Innenseite eines Einbands (102, 104) oder auf der Rückseite eines Personalisierungsblattes (106) angelegt ist, dessen Vorderseite die Personalisierungsseite (108) ausbildet.

4. Dokument (100) nach Anspruch 1, weiterhin aufweisend eine Anzahl von Innenblättern (116).

5. Dokument (100) nach Anspruch 4, wobei die zweite optisch lesbare Zone (120) auf einem der Innenblätter (116) angelegt ist, insbesondere auf dem einem Einband (102, 104) gegenüberliegenden Innenblatt oder auf dem ersten Innenblatt gegenüberliegend zu der Personalisierungsseite (108) angeordnet ist.

6. Dokument (100) nach einem der vorhergehenden Ansprüche, **dadurch gekennzeichnet, dass** die zweite optisch lesbare Zone (120) nur im nahen IR-Bereich erfassbar ist.

7. Dokument (100) nach einem der vorhergehenden Ansprüche, wobei die zweite optisch lesbare Zone (120) neben den Informationen der ersten optisch lesbaren Zone (114) weitere Informationen, insbesondere biometrische Merkmale nach einer Merkmalsextraktion, enthält.

8. System mit einem Lesegerät (130) und mit einem Dokument (100) nach einem der Ansprüche 1 bis 7, wobei das Lesegerät (130) umfasst:
- Mittel zur optischen Erfassung einer optisch lesbaren Zone (114, 120) des Dokuments (100),
- eine Funkschnittstelle zur Kommunikation mit der Funkschnittstelle des integrierten elektronischen Schaltkreises (140),
- Mittel zur Durchführung eines kryptographischen Protokolls (204, 302) mit Hilfe der optisch erfassten Informationen aus einer optisch lesbaren Zone (114, 120), um auf die in dem integrierten elektronischen Schaltkreis (140) gespeicherten Daten Zugriff zu erhalten.

9. System nach Anspruch 8, **dadurch gekennzeichnet, dass** das Lesegerät (130) eine Lichtquelle im sichtbaren Wellenlängenbereich und/oder im nahen IR-Bereich und/oder im nahen UV-Bereich umfasst.

10. System nach einem der Ansprüche 8 oder 9, **dadurch gekennzeichnet, dass** das System eine Schleusenvorrichtung mit Türen umfasst, die bei erfolgreicher Verifizierung und/oder Authentifizierung geöffnet werden.

## Claims

1. A document (100) having a book-like structure with a front and rear binding (102, 104), a personalisation page (108), and with an integrated electronic circuit (140) for storing data, wherein the circuit (140) comprises a radio interface for reading the data, and wherein the personalisation page (108) is provided with a first optically readable zone (114) with information, wherein a second optically readable zone (120) is provided, in which the information of the first optically readable zone (114) is contained, and the front and/or rear binding (102, 104) has a window (122), through which the second optically readable zone (120) is optically detectable in the closed state of the document (100), **characterised in that** the window (122) is only permeable for light in the near IR range and in particular is made of a plastic.

2. The document (100) according to claim 1, wherein the second optically readable zone (120) is placed on the personalisation page (108) and in particular is a part or region in the first optically readable zone (114).

3. The document according to claim 1, wherein the second optically readable zone (120) is placed on an inner side of a binding (102, 104) or on the rear side of a personalisation sheet (106) of which the front side forms the personalisation page (108).

4. The document (100) according to claim 1, further comprising a number of inner sheets (116).

5. The document (100) according to claim 4, wherein the second optically readable zone (120) is placed on one of the inner sheets (116), in particular on the inner sheet opposite a binding (102, 104) or is arranged on the first inner sheet opposite the personalisation page (108).

6. The document (100) according to any one of the preceding claims, **characterised in that** the second optically readable zone (120) is detectable only in the near IR range.

7. The document (100) according to any one of the preceding claims, wherein the second optically readable zone (120), besides the information of the first optically readable zone (114), contains further information, in particular biometric features after a feature extraction.

8. A system with a reader (130) and with a document (100) according to any one of claims 1 to 7, wherein the reader (130) comprises:
- means for optically detecting an optically readable zone (114, 120) of the document (100),
- a radio interface for communicating with the radio interface of the integrated electronic circuit (140),
- means for executing a cryptographic protocol (204, 302) with the aid of the optically detected information from an optically readable zone (114, 120) so as to obtain access to the data stored in the integrated electronic circuit (140).

9. The system according to claim 8, **characterised in that** the reader (130) comprises a light source in the visible wavelength range and/or in the near IR range and/or in the near UV range.

10. The system according to either one of claims 8 or 9, **characterised in that** the system comprises a gate device with doors, which are opened following successful verification and/or authentication.

## Revendications

1. Document (100) dans une structure de type livre avec une reliure de devant et une reliure de dos (102, 104), une page de personnalisation (108) et un circuit de commutation (140) électronique intégré pour le stockage de données, où le circuit de commutation (140) comprend une interface radio pour la lecture des données, et où la page de personnalisation (108) est munie d'une première zone lisible optiquement (114) avec des informations, où une deuxième zone lisible optiquement (120) est prévue, dans laquelle les informations de la première zone lisible optiquement (114) sont contenues, et la reliure de devant et/ou de dos (102, 104) présente une fenêtre (122), par laquelle la deuxième zone lisible optiquement (120) est accessible optiquement dans l'état fermé du document (100), **caractérisé en ce que** la fenêtre (122) n'est transparente que pour de la lumière dans le domaine IR proche et est en particulier constituée d'une matière plastique.

2. Document (100) selon la revendication 1, dans lequel la deuxième zone lisible optiquement (120) est implantée sur la page de personnalisation (108) et est notamment une partie ou un domaine dans la première zone lisible optiquement (114).

3. Document selon la revendication 1, dans lequel la deuxième zone lisible optiquement (120) est implantée sur une face interne d'une reliure (102, 104) ou sur le verso d'une feuille de personnalisation (106), dont le recto forme la page de personnalisation (108).

4. Document (100) selon la revendication 1, présentant en outre un certain nombre de pages internes (116).

5. Document (100) selon la revendication 4, dans lequel la deuxième zone lisible optiquement (120) est implantée sur une des pages internes (116), est disposée notamment sur une feuille interne située en face d'une reliure (102, 104) ou sur la première feuille interne située en face de la page de personnalisation (108).

6. Document (100) selon l'une des revendications précédentes, **caractérisé en ce que** la deuxième zone lisible optiquement (120) n'est accessible que dans le domaine IR proche.

7. Document (100) selon l'une des revendications précédentes, dans lequel la deuxième zone lisible optiquement (120) contient, en plus des informations de la première zone lisible optiquement (114), d'autres informations, notamment des caractéristiques biométriques après une extraction de caractéristiques.

8. Système avec un lecteur (130) et avec un document (100) selon l'une des revendications 1 à 7, dans lequel le lecteur (130) comprend :
- des moyens pour la détection optique d'une zone lisible optiquement (114, 120) du document (100),
- une interface radio pour la communication avec l'interface radio du circuit de commutation (140) électronique intégré,
- des moyens pour l'exécution d'un protocole cryptographique (204, 302) à l'aide des informations détectées optiquement à partir d'une zone lisible optiquement (114, 120) pour avoir accès aux données stockées dans le circuit de commutation (140) électronique intégré.

9. Système selon la revendication 8, **caractérisé en ce que** le lecteur (130) comprend une source lumineuse dans le domaine des longueurs d'onde visible et/ou dans le domaine IR proche et/ou dans le domaine UV proche.

10. Système selon l'une des revendications 8 ou 9, **caractérisé en ce que** le système comprend un dispositif d'éclusage avec des portes qui sont ouvertes lors d'une vérification et/ou d'une authentification couronnées de succès.
